# EUROPÄISCHE PATENTSCHRIFT

(11) **EP 2 341 254 B1**
(45) Veröffentlichungstag und Bekanntmachung des Hinweises auf die Patenterteilung: **02.01.2013**
(21) Anmeldenummer: 10014827.9
(22) Anmeldetag: 22.11.2010
(51) Int. Cl.: F16B 7/04, F16B 7/18, F24J 2/52

(54) **Kreuzverbinder**
Connector element and cross connector
Elément de connecteur et connecteur croisé

(30) Priorität: 22.12.2009 DE 202009017491 U
(43) Veröffentlichungstag der Anmeldung: 06.07.2011
(60) Teilanmeldung: 12001828.8
(73) Patentinhaber: VM Edelstahltechnik GmbH, 58840 Plettenberg (DE)
(72) Erfinder: Mächtle, Daniel, 58840 Plettenberg (DE)
(74) Vertreter: Jakelski & Althoff

(56) Entgegenhaltungen:
- EP-A1- 1 439 269
- EP-A1- 2 194 205
- DE-U1-202004 017 022
- FR-A1- 2 563 293
- US-A1- 2003 154 838

## Beschreibung

Die vorliegende Erfindung betrifft einen Kreuzverbinder zur Verbindung von zwei Bauteilen.

Bei der Montage von Stützgerüsten, Unterkonstruktionen oder dergleichen, beispielsweise für Solaranlagen, sind verschiedene Bauteile miteinander zu verbinden. Grundbauelemente für derartige Konstruktionen sind Profilschienen, die mit anderen Bauteilen, wie beispielsweise Dachhaken, verschiedenartigen Klemmen und insbesondere auch mit weiteren Profilschienen, fest zu verbinden sind.

Es sind hierfür bereits Verbinderelemente bekannt, die aus zwei in einem rechten Winkel zueinander stehenden Schenkeln bestehen, die jeweils eine Bohrung für ein Befestigungsmittel umfassen. Mit derartigen Verbinderelementen können beispielsweise zwei rechtwinklig zueinander stehende Profilschienen aneinander befestigt werden. Die Verbinderelemente können für die Befestigung einer Vielzahl unterschiedlicher Bauteile eingesetzt werden. Beispielsweise ist aus der US 2003/0154838 A1 ein Kreuzverbinder bekannt, welcher zum Verbinden von zwei Profilleisten einer Rahmenkonstruktion geeignet ist. Ein erster Schenkel des Kreuzverbinders weist auf der von einem zweiten Schenkel abgewandten Fläche an einem äußeren Rand eine Verdickung auf. Der zweite Schenkel weist auf seiner dem ersten Schenkel abgewandten Fläche ein lippenförmiges Auflageelement auf. Dieser Kreuzverbinder muss allerdings mit beiden Profilleisten verschraubt werden, wozu in diesen Bohrungen vorgesehen sein müssen.

Der Erfindung liegt die Aufgabe zugrunde, verbesserte Kreuzverbinder bereitzustellen, die die geschilderten Nachteile von Verbinderelementen aus dem Stand der Technik beseitigen.

Diese Aufgabe wird durch einen Kreuzverbinder gelöst, wie er Gegenstand der unabhängigen Ansprüche ist. Durch die in den abhängigen Ansprüchen aufgeführten Maßnahmen sind vorteilhafte Weiterbildungen und Verbesserungen des in den unabhängigen Ansprüchen angegebenen Kreuzverbinders möglich.

Der Kreuzverbinder weist einen ersten und einen zweiten Schenkel auf, wobei die Schenkel in einem festen Winkel, insbesondere einem rechten Winkel, zueinander stehen. Der zweite Schenkel weist auf seiner dem ersten Schenkel abgewandten Fläche wenigstens ein Hakenelement, insbesondere einen parallel zu der Breite des Schenkels verlaufenden Steg auf. Dieses Hakenelement bzw. der Steg sind dazu vorgesehen, eine beispielsweise C-förmige Einlegenut einer ersten Profilschiene, insbesondere eine seitliche Einlegenut der Profilschiene, zu hintergreifen. Hierdurch kann der Kreuzverbinder verschiebbar in die Profilschiene eingehakt werden. Der andere bzw. der erste Schenkel des Kreuzverbinders ist mit einer Bohrung bzw. einer Aussparung versehen, durch die ein Befestigungsmittel hindurchgeführt werden kann, sodass an dem ersten Schenkel ein weiteres Bauteil, beispielsweise eine weitere Profilschiene, im rechten Winkel zu der ersten Profilschiene, in die der Kreuzverbinder eingehakt ist, befestigt werden kann. Erfindungsgemäß weist der erste Schenkel auf der von dem zweiten Schenkel abgewandten Fläche an dem offenen Ende des Schenkels im Bereich der Kante bzw. am äußeren Rand wenigstens eine Verdickung, insbesondere einen parallel zum Rand verlaufenden Steg auf. Durch diese Verdickung liegt der erste Schenkel nicht vollständig plan auf dem anderen Bauteil, beispielsweise der weiteren Profilschiene, auf. Vielmehr nimmt der erfindungsgemäße Kreuzverbinder durch diese Verdickung bei dem Spannen des Befestigungsmittels eine gewisse Hohllage ein und der Kreuzverbinder wird gegen die erste Profilschiene gedrückt, sodass sich die Einhakung des Hakenelements in der Einlegenut der ersten Profilschiene verspannt und hierdurch die Verbindung über das Hakenelement weiter stabilisiert und fixiert wird. Durch die Hohllage wird einem Kippmoment entgegengewirkt, sodass eine sehr feste Verbindung der beiden Bauteile über den erfindungsgemäßen Kreuzverbinder realisiert wird.

Die Aussparung in dem ersten Schenkel für das Befestigungsmittel kann beispielsweise ein Langloch oder ein Rundloch sein. Ein Langloch hat den Vorteil einer größeren Flexibilität bei der Befestigung des erfindungsgemäßen Kreuzverbinders, indem die Verbindung zwischen dem Kreuzverbinder und dem weiteren Bauteil über das Langloch eingestellt werden kann.

Vorzugsweise sind auf der von dem zweiten Schenkel abgewandten Fläche des ersten Schenkels parallel zu den Außenkanten seitlich verlaufende Führungsleisten vorgesehen. Diese Führungsleisten können beispielsweise eine darunter zu befestigende Profilschiene umgreifen und erleichtern so die Positionierung und die Fixierung des erfindungsgemäßen Kreuzverbinders. Weiterhin wird hierdurch die Verbindung des Kreuzverbinders mit der Profilschiene stabilisiert, da ein Verrutschen vermieden wir. Andere Ausführungsformen können ohne seitliche Führungsleisten realisiert sein, um den erfindungsgemäßen Kreuzverbinder noch variabler und unabhängig von der Gestaltung einer Profilschiene oder eines anderen Bauteils einsetzen zu können.

Wenigstens eine der einander zugewandten Flächen der Schenkel des erfindungsgemäßen Kreuzverbinders weist eine konvexe Wölbung auf. Hierdurch wird die Materialstärke des erfindungsgemäßen Kreuzverbinders und damit dessen Stabilität erhöht. Weiterhin werden durch die konvexe Wölbung scharfe Kanten vermieden, wodurch die Handhabung des erfindungsgemäßen Kreuzverbinders für den Monteur noch angenehmer wird.

In der Mitte der Fläche des zweiten Schenkels kann die gewölbte Fläche von einer zentralen Ausnehmung oder Vertiefung unterbrochen sein. Hierdurch kann der Zugang für die Betätigung des Befestigungsmittels erleichtert werden, insbesondere wenn der erfindungsgemäße Kreuzverbinder verhältnismäßig klein und die Bohrung im ersten Schenkel für das Befestigungsmittel relativ nah am zweiten Schenkel vorgesehen ist.

Der erfindungsgemäße Kreuzverbinder ist vorzugsweise aus Metall gefertigt, um eine ausreichende Stabilität und Beständigkeit zu gewährleisten. Er kann beispielsweise als Strangpressprofil, insbesondere aus Aluminium, gefertigt sein. Besonders bevorzugt ist die Fertigung als Druckgussteil, beispielsweise als Aluminiumdruckgussteil oder Zinkdruckgussteil.

Weitere Merkmale und Vorteile der Erfindung ergeben sich aus der nachfolgenden Beschreibung von Ausführungsbeispielen im Zusammenhang mit den Zeichnungen. Hierbei können die verschiedenen Merkmale jeweils für sich oder in Kombination miteinander verwirklicht sein.

In den Zeichnungen zeigen:
- Figur 1: eine erste Ausführungsform eines erfindungsgemäßen Kreuzverbinders in einer Ansicht von schräg oben;

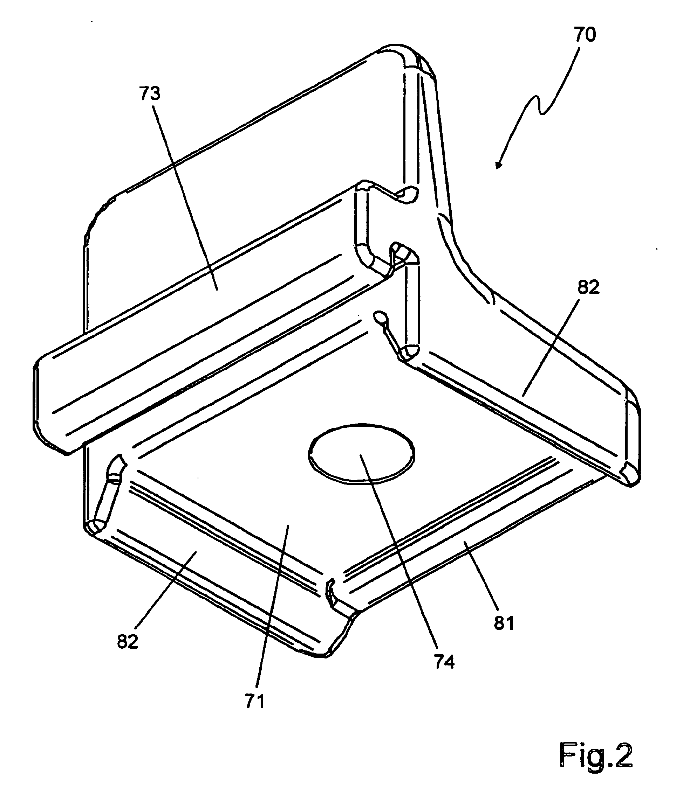

- Figur 2: der erfindungsgemäße Kreuzverbinder aus Figur 1 in einer Ansicht von schräg unten;
- Figur 3: der Kreuzverbinder aus Figur 1 in einer geschnittenen Darstellung;
- Figur 4: eine schematische Darstellung zweier mit einem erfindungsgemäßen Kreuzverbinder verbundener Profilschienen und
- Figur 5: eine weitere Ausführungsform des erfindungsgemäßen Kreuzverbinders in einer Ansicht von schräg oben.

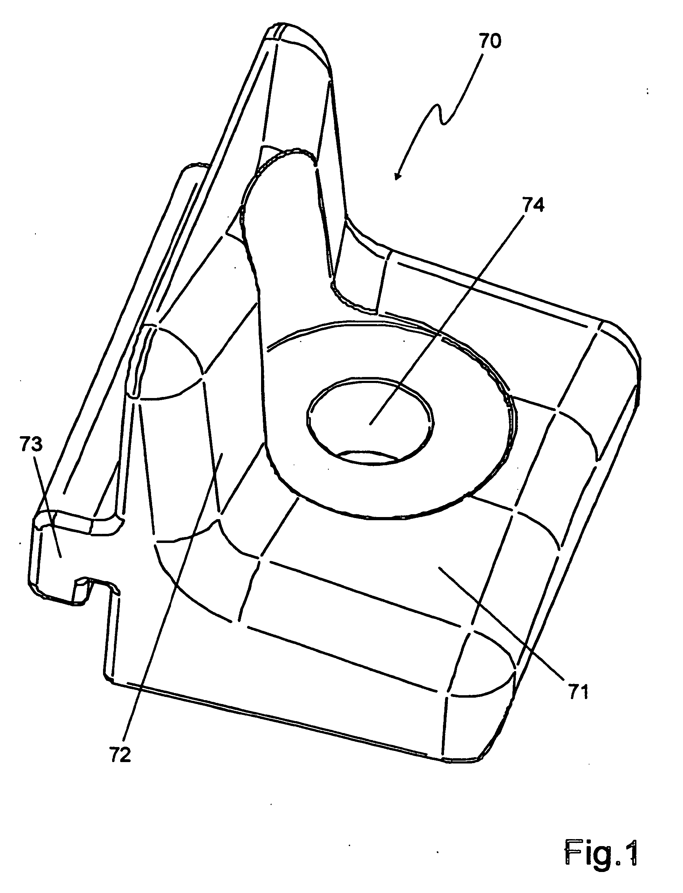

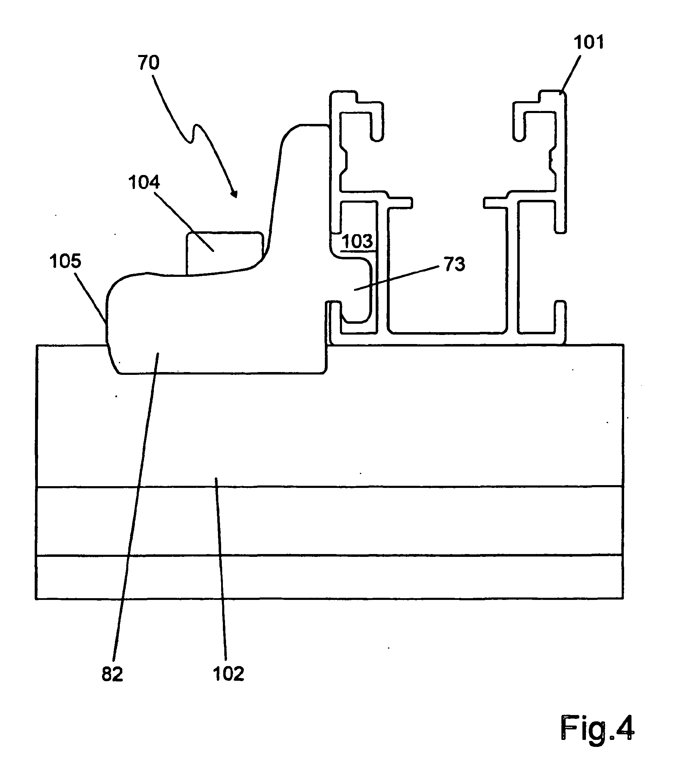

**Figur 1** zeigt einen erfindungsgemäßen Kreuzverbinder 70 in einer Ansicht von schräg oben. Der Kreuzverbinder 70 umfasst einen ersten Schenkel 71 und einen zweiten Schenkel 72, die im Wesentlichen in einem rechten Winkel zueinander stehen. Der zweite Schenkel 72 weist auf seiner dem Schenkel 71 abgewandten Fläche ein Hakenelement 73 in Form eines parallel zu der Breite des Schenkels 71 verlaufenden Stegs auf. Das Hakenelement 73 ist dazu vorgesehen, in eine Einlegenut einer ersten Profilschiene (siehe Figur 4) eingehakt zu werden. Hierbei kann es sich beispielsweise um eine seitliche Einlegenut einer Profilschiene handeln. Über eine Bohrung 74, hier in Form eines Rundlochs, kann mittels eines Befestigungsmittels der Kreuzverbinder 70 mit einer weiteren Profilschiene (hier nicht gezeigt) oder einem anderen Bauteil verbunden werden, die bzw. das quer zu der ersten Profilschiene angeordnet werden kann. Als Widerlager für das Befestigungsmittel kann eine übliche Gewindeplatte eingesetzt werden, die in an sich bekannter Weise innerhalb der weiteren Profilschiene oder unterhalb des anderen Bauteils fixiert wird.

F**igur 2** zeigt den Kreuzverbinder 70 in einer Ansicht von schräg unten. Parallel zu der vorderen Kante des Schenkels 71 ist auf der Unterseite des Kreuzverbinders 70 eine Verdickung 81 in Form eines Steges vorgesehen. Wenn der Schenkel 71 des Kreuzverbinders 70 auf einer Profilschiene aufgelegt wird, liegt die Unterseite des Kreuzverbinders 70 nicht eben auf, sondern der Kreuzverbinder 70 liegt im vorderen Bereich mit dem Steg 81 auf der Profilschiene auf. Wenn nun der Kreuzverbinder 70 mit einem Befestigungsmittel, das durch das Rundloch 74 hindurchgeführt wird, auf der Profilschiene befestigt wird, gerät der Kreuzverbinder 70 beim Spannen des Befestigungsmittels gewissermaßen in eine Hohllage, wodurch das Hakenelement nach unten und gegen die erste Profilschiene gedrückt wird. Hierdurch wird eine klemmende Wirkung der Verbindung des Hakenelements 73 mit der Einlegenut, in die das Hakenelement 73 eingefügt ist, erzielt. Durch diese verstärkte Klemmwirkung wird die Verbindung des Kreuzverbinders 70 mit den aneinander zu befestigenden Bauteilen (siehe Figur 4) weiter verstärkt und stabilisiert.

Die seitlichen Bereiche des Kreuzverbinders 70 im Bereich des Schenkels 71 sind mit seitlichen Führungsleisten 82 versehen. Diese Führungsleisten 82 umgreifen Abschnitte der Profilschiene bei der Befestigung des Kreuzverbinders 70 auf der Profilschiene, sodass hierdurch die Positionierung und Befestigung des Kreuzverbinders 70 auf der Profilschiene weiter stabilisiert wird.

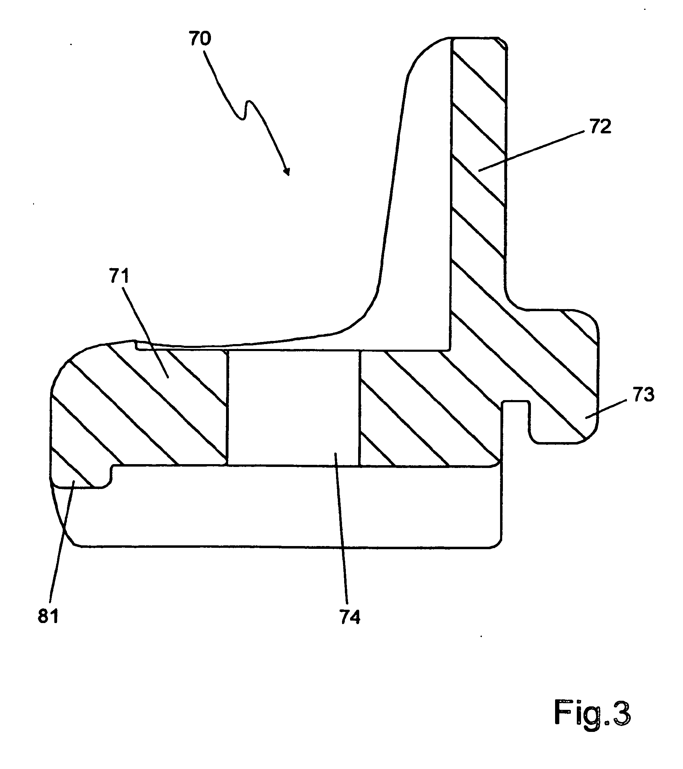

**Figur 3** zeigt eine Schnittdarstellung des Kreuzverbinders 70 mit dem ersten Schenkel 71 und dem zweiten Schenkel 72. Der erste Schenkel 71 weist die zentrale Bohrung 74 auf, die zum Hindurchführen eines Befestigungsmittels vorgesehen ist. Die dem ersten Schenkel 71 abgewandte Fläche des Schenkels 72 ist mit dem stegförmigen Hakenelement 73 ausgestattet. Die Unterseite der vorderen Kante des ersten Schenkels 71 weist eine Verdickung 81 oder eine Nase in Form eines parallel zu der Kante verlaufenden Steges auf.

Die schematische Darstellung in **Figur 4** verdeutlicht die Verbindung von zwei Bauteilen 101 und 102 mit Hilfe des erfindungsgemäßen Kreuzverbinders 70. Das Hakenelement 73 des Kreuzverbinders 70 greift in eine seitliche Einlegenut 103, die eine C-förmige Aufnahme bildet, einer hier im Schnitt gezeigten ersten Profilschiene 101 ein. Mittels eines Befestigungsmittels, insbesondere einer Schraube 104, wird der Kreuzverbinder 70 auf einer weiteren Profilschiene 102, die hier in Seitenansicht gezeigt ist, befestigt. Hierbei dient eine innerhalb der Profilschiene 102 angeordnete Gewindeplatte (hier nicht sichtbar) als Widerlager für das Befestigungsmittel 104. Die seitlichen Führungsleisten 82 des Kreuzverbinders 70 umgreifen die Profilschiene 102 von außen, sodass der Kreuzverbinder 70 stabil auf der Profilschiene 102 positioniert ist. In dieser Darstellung nicht zu erkennen ist die Verdickung 81 im Bereich der vorderen Kante 105 des Kreuzverbinders 70, mit der der Kreuzverbinder 70 auf der Profilschiene 102 aufliegt. Durch das Spannen des Befestigungsmittels 104 gerät der Kreuzverbinder 70 hierdurch in eine Hohllage und wird gegen die Profilschiene 101 gedrückt, sodass die Klemmwirkung des Hakenelements 73 innerhalb der seitlichen Einlegenut 103 der Profilschiene 101 verstärkt wird. Statt der Verbindung von zwei Profilschienen 101 und 102 können auch andere Bauteile mittels des erfindungsgemäßen Kreuzverbinders 70 miteinander verbunden werden, beispielsweise ein Dachhaken an einer Profilschiene oder eine Stockschraube an einer Profilschiene.

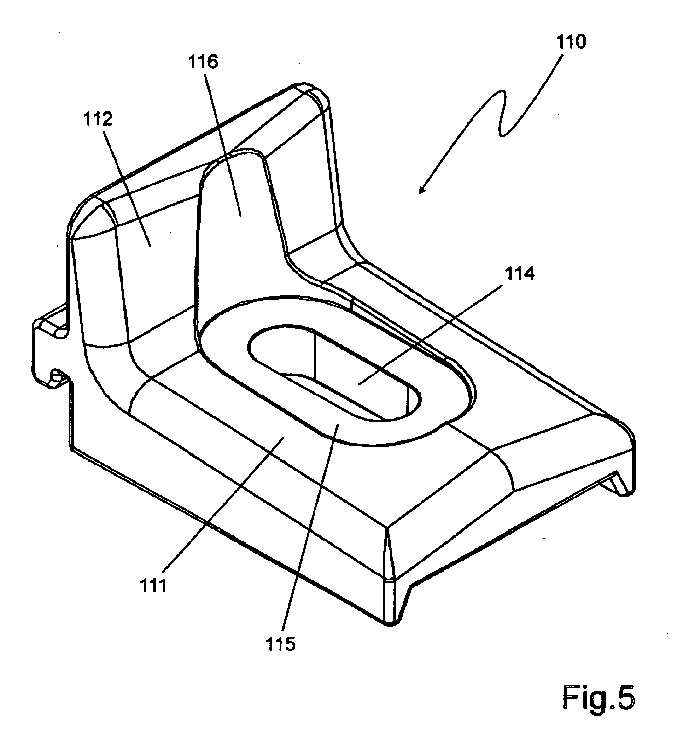

**Figur 5** zeigt eine weitere Ausführungsform 110 des erfindungsgemäßen Kreuzverbinders. Statt eines Rundlochs ist in dieser Ausführungsform ein Langloch 114 vorgesehen, das die variable Einsetzbarkeit des Kreuzverbinders 110 erhöht. Die einander zugewandten Flächen der Schenkel 111 und 112 des Kreuzverbinders 110 sind im Wesentlichen konvex gewölbt. Im Bereich des Langlochs 114 ist eine umlaufende Einsenkung 115 vorgesehen, um eine ebene Auflagefläche für beispielsweise einen Schraubenkopf eines Befestigungsmittels bereitzustellen. Im mittleren Bereich des zweiten Schenkels 112 ist die konvexe Wölbung der Fläche von einer Ausnehmung oder Vertiefung 116 unterbrochen, um gegebenenfalls Platz für die Betätigung eines Befestigungsmittels bereitzustellen.

## Patentansprüche

1. Kreuzverbinder (70; 110) zur Verbindung von zwei Bauteilen (101, 102) mit einem ersten und einem zweiten in einem Winkel zueinander stehenden Schenkel (71, 72; 111, 112), wobei der erste Schenkel (71; 111) auf der von dem zweiten Schenkel (72; 112) abgewandten Fläche am äußeren Rand (105) wenigstens eine Verdickung (81) aufweist, **dadurch gekennzeichnet, dass** der zweite Schenkel (72; 112) auf seiner dem ersten Schenkel (71; 111) abgewandten Fläche wenigstens ein Hakenelement (73) aufweist, und wenigstens eine der einander zugewandten Flächen der Schenkel (71, 72; 111, 112) eine konvexe Wölbung aufweist, wobei die Wölbung des zweiten Schenkels (72; 112) eine zentrale, im Wesentlichen parallel zu den seitlichen Außenkanten verlaufende Ausnehmung (116) aufweist.

2. Kreuzverbinder nach Anspruch 1, **dadurch gekennzeichnet, dass** das Hakenelement ein parallel zur Breite des Schenkels verlaufender Steg (72, 112) ist.

3. Kreuzverbinder nach Anspruch 1 oder Anspruch 2, **dadurch gekennzeichnet, dass** die Verdickung (81) ein parallel zum Rand verlaufener Steg ist.

4. Kreuzverbinder nach einem der Ansprüche 1 bis 3, **dadurch gekennzeichnet, dass** der erste Schenkel (111; 71) ein Langloch (114) oder ein Rundloch (74) aufweist.

5. Kreuzverbinder nach einem der Ansprüche 1 bis 4, **dadurch gekennzeichnet, dass** die dem zweiten Schenkel (72; 112) abgewandte Fläche des ersten Schenkels (71; 111) parallel zu den seitlichen Außenkanten seitliche Führungsleisten (82) aufweist.

## Claims

1. A cross connector (70; 110) for connecting two components (101, 102), comprising a first and second limb (71, 72; 111, 112) which are disposed at an angle with respect to each other, with the first limb (71; 111) having at least one enlargement (81) at the outer edge (105) on the surface facing away from the second limb (72; 112), **characterized in that** the second limb (72; 112) comprises at least one hook element (73) on its surface facing away from the first limb (71; 111), and at least one of the mutually facing surfaces of the limbs (71, 72; 111, 112) has a convex bulging portion, with the bulging portion of the second limb (72; 112) having a central recess (116) extending substantially parallel to the lateral outside edges.

2. A cross connector according to claim 1, **characterized in that** the hook element is a web (72, 112) extending parallel to the width of the limb.

3. A cross connector according to claim 1 or claim 2, **characterized in that** the enlargement (81) is a web extending parallel to the edge.

4. A cross connector according to one of the claims 1 to 3, **characterized in that** the first limb (111; 71) comprises an oblong hole (114) or a round hole (74).

5. A cross connector according to one of the claims 1 to 4, **characterized in that** the surface of the first limb (71; 111) which faces away from the second limb (72; 112) comprises lateral guide strips (82) parallel to the lateral outer edges.

## Revendications

1. Connecteur croisé (70, 110) pour la liaison de deux composants (101, 102) comprenant une première branche et une seconde branche (71, 72, 111, 112) décalées angulairement l'une par rapport à l'autre, la première branche (71, 111) comprenant, sur sa face située à l'opposé de la seconde branche (72, 112), sur son bord extérieur (105), au moins un épaississement (81),
**caractérisé en ce que**
la seconde branche (72, 112) comporte, sur sa face située à l'opposé de la première branche (71, 111) au moins un élément d'accrochage (73), et au moins l'une des faces tournées l'une vers l'autre des branches (71, 72, 111, 112) comporte une courbure convexe, la courbure de la seconde branche (72, 112) comportant un évidement médian (116) dirigé essentiellement parallèlement aux bords externes latéraux.

2. Connecteur croisé conforme à la revendication 1,
**caractérisé en ce que**
l'élément d'accrochage est une barrette (72, 112) dirigée parallèlement à la largeur de la branche.

3. Connecteur croisé conforme à la revendication 1 ou à la revendication 2,
**caractérisé en ce que**
l'épaississement (81) est une barrette dirigée parallèlement au bord.

4. Connecteur croisé conforme à l'une des revendications 1 à 3,
**caractérisé en ce que**
la première branche (71, 111) comporte un perçage longitudinal (114) ou un perçage rond (74).

5. Connecteur croisé conforme à l'une des revendications 1 à 4,
**caractérisé en ce que**
la face de la première branche (71, 111) située à l'opposé de la seconde branche (72, 112) comporte des languettes de guidage latéral (82) parallèles aux bords latéraux externes.
